# EUROPÄISCHE PATENTSCHRIFT

(11) **EP 0 403 763 B1**
(45) Veröffentlichungstag und Bekanntmachung des Hinweises auf die Patenterteilung: **21.09.1994**
(21) Anmeldenummer: 90107905.3
(22) Anmeldetag: 26.04.1990
(51) Int. Cl.: H04L 12/46

(54) **Verfahren zum Vernetzen von Rechnern und/oder Rechnernetzen sowie Vernetzungssystem**
Method and system to interconnect computers or computer networks
Méthode et système d'interconnexion de calculateurs ou de réseaux de calculateurs

(30) Priorität: 19.06.1989 DE 3919962
(43) Veröffentlichungstag der Anmeldung: 27.12.1990
(73) Patentinhaber: RICHARD HIRSCHMANN GMBH & CO., 73726 Esslingen (DE)
(72) Erfinder: Schenkyr, Rainer, D-7313 Reichenbach (DE); Schmid, Bernhard c/o Richard Hirschmann GmbH, D-7300 Esslingen (DE)
(74) Vertreter: Geyer, Ulrich F., Dr. Dipl.-Phys.

(56) Entgegenhaltungen:
- EP-A- 0 102 059
- WO-A-83/03179
- US-A- 4 747 115
- US-A- 4 780 869

## Beschreibung

Die Erfindung betrifft ein Verfahren zur Sicherung der Datenübertragung in einem linearen Rechnernetz mit CSMA/CD-(Carrier Sense Multiple Access/Collision Detection)-Zugriffsverfahren, bei dem das Auftreten einer Unterbrechung im Rechnernetz ermittelt und in Abhängigkeit davon eine redundante Verbindungseinrichtung aktiviert wird, sowie eine Anordnung zur Durchführung des Verfahrens.

Ein Verfahren bzw. eine Anordnung dieser Art ist aus der US-A-4 747 115 bekannt. Bei diesem bekannten Rechnernetz mit CSMA/CD-Zugriffsverfahren werden zwei parallele Übertragungsleitungen verwendet, so daß eine der beiden Leitungen als Ersatz dienen kann, wenn die andere Leitung gestört ist. Die redundante Verbindungseinrichtung besteht also in einer zweiten parallelen Leitung. Die Aufgabe dieser Anordnung besteht im wesentlichen darin, eine Umschaltung von der einen Übertragungsleitung auf die andere vorzusehen. Dabei wird Wert darauf gelegt, daß die Umschaltung in einem Zeitraum zwischen zwei benachbarten Datenpaketen erfolgt. Die Endgeräte stellen dabei Fehler auf einer der beiden Leitungen fest. In Abhängigkeit davon wird dann auf die redundante Leitung umgeschaltet. Der Aufwand für ein derartiges Netzsystem ist aufgrund der doppelten Ausführung groß und die Fehlerkennung ist nicht unabhängig von den Endgeräten möglich.

In "DATACOM" 1988, Heft 3, Seiten 81 bis 87, sind Vernetzungsverfahren zur Verbindung lokaler Netzwerke für Rechner beschrieben. In lokalen Netzwerksystemen nach der IEEE 802.3 - oder der Ethernet-Norm werden vorzugsweise sogenannte Bridges als Kopplungsschaltungen verwendet. Da derartige Bridges die Ziel- und Quellenadresse jedes Pakets analysieren, erkennen sie, wenn eine Bridge- oder eine Leitung im Netzwerksystem ausfällt, oder unterbrochen ist und andere Bridges übernehmen dann die Datenübertragung. Auf Grund der Ziel- und Quellenadressen-Analyse durch die Bridges können sie auch feststellen, wenn eine zunächst ausgefallene Bridge wieder ihre Arbeit aufgenommen hat und dadurch innerhalb des Netzwerksystems eine Ringverbindung auftritt, die zu Fehlern führt. Bei Erkennen einer solchen Ringverbindung sind die Bridges in der Lage, die Ringverbindung aufzulösen.

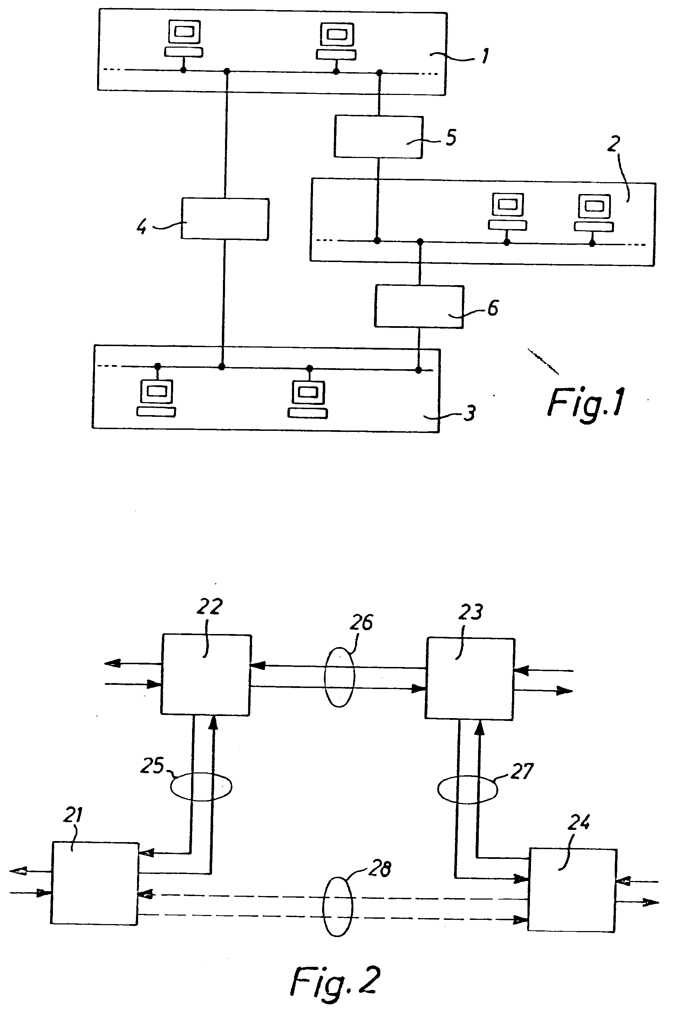

In Fig. 1 ist ein derartiges, lokale Bridges verwendendes Vernetzungssystem für lokale Netzwerke schematisch dargestellt. Die Einzelrechner umfassenden Netzwerksegmente 1, 2 und 3 sind über lokale Bridges 4, 5 und 6 miteinander verbunden. Bei Ausfall einer der lokalen Bridges 4, 5 oder 6 bzw. einer damit verbundenen Leitung übernehmen die verbleibenden Bridges die Datenübertragung, so daß auch bei einem Leitungsausfall im Vernetzungssystem die Datenübertragung sichergestellt ist. Nach Wiederherstellung der ausgefallenen Leitungsverbindung kann über die lokalen Bridges 4, 5 und 6 eine Ringverbindung entstehen, die unterbunden werden muß. Auf Grund ihrer umfangreichen und komplizierten Schaltungstechnik sind die Bridges - wie bereits erwähnt - jedoch in der Lage, eine derartige Ringverbindung zu erkennen und den Ringtransport zu unterbrechen. Beispielsweise werden in diesem Falle Daten vom Netzwerksegment 1 nur über einen Verbindungsweg, beispielsweise nur über die lokale Bridge 4 und nicht über die lokalen Bridges 5 und 6 übertragen. Wie bereits erwähnt, ist der Einsatz derartiger lokaler Bridges auf Grund des hohen Hard- und Softwareaufwands häufig und insbesondere beim Aufbau kleinerer Vernetzungssysteme nicht geeignet oder nicht wünschenswert.

Fig. 2 zeigt eine weitere bekannte Ausführungsform eines Vernetzungssystems, bei dem in einem mit Lichtwellenleitern aufgebauten optischen Netzwerk aktive Sternkoppler 21, 22, 23 und 24 vorgesehen sind, an die jeweils Teilnehmer angeschlossen sind. Die Sternkoppler 21, 22, 23 und 24 sind über Lichtwellenleiter jeweils mit ihren benachbarten Sternkopplern verbunden, wie dies durch die Leitungen 25, 26 und 27 dargestellt ist. Auf den Verbindungsleitungen werden zwischen den zu übertragenden Datensignalen bzw. Datenpaketen Leer- oder IDLE-Signale zur Leitungsüberwachung übertragen. Fällt nun ein IDLE-Signal auf Grund einer Unterbrechung der Verbindungsleitungen 25 oder 27 entweder im Sternkoppler 21 oder 24 aus, so können die Daten über eine redundante Strecke 28 übertragen werden und das Vernetzungssystem arbeitet wieder vorschriftsmäßig.

Die Verwendung redundanter Strecken im Vernetzungssystem zur redundanten Übertragung von Daten bei Ausfall einer Verbindungsleitung oder eines Sternkopplers im Vernetzungssystem ist jedoch nur begrenzt möglich, wie dies beispielsweise bei einer Punkt-zu-Punkt-Verbindung oder einer Verbindung der Fall ist, bei der nur höchstens ein Sternkoppler zwischen zwei weiteren Sternkopplern liegt.

Fällt bei dem in Fig. 2 dargestellten Beispiel etwa die Verbindungsleitung 26 zwischen den Sternkopplern 22 und 23 aus, so kann das Vorhandensein der redundanten Strecke 28 diesen Fehler nicht kompensieren, da die Sternkoppler 21 und 24 diesen Zustand nicht erkennen können und damit auch nicht in der Lage sind, die redundante Strecke 28 durchzuschalten.

Der vorliegenden Erfindung liegt daher die Aufgabe zugrunde, ein Verfahren zum Vernetzen von Rechnern und/oder Rechnernetzen untereinander sowie ein Vernetzungssystem zur Ausführung des Verfahrens anzugeben, mit dem es auf einfache Weise möglich ist, auch bei komprizierten Vernetzungssystemen und ohne parallele Leitung eine sichere, redundante Funktionsweise zu gewährleisten, wenn im Vernetzungssystem eine Verbindungsleitung und/oder eine Kopplungsschaltung ausfällt.

Diese Aufgabe wird erfindungsgemäß dadurch gelöst, daß die redundante Verbindungseinrichtung prüft, ob an ihren beiden mit dem Vernetzungssystem verbundenen Anschlüssen ein Datensignal innerhalb eines vorgegebenen Zeitraums gleichzeitig auftritt. Das Ergebnis dieser Prüfung wird dann dafür verwandt, ob die redundante Strecke durchgeschaltet wird oder nicht, und zwar vorzugsweise derart, daß die redundante Verbindungseinrichtung aktiviert wird, wenn an ihren beiden Anschlüssen ein Datensignal nicht innerhalb eines vorgegebenen Zeitraums gleichzeitig auftritt. Die redundante Verbindungseinrichtung wird dagegen in den inaktiven Zustand versetzt, wenn an ihren beiden Anschlüssen ein Datensignal innerhalb eines vorgegebenen Zeitraums gleichzeitig auftritt. Liegt nämlich gleichzeitig an beiden Anschlüssen ein Datensignal an, bedeutet dies, daß das Datensignal von einem beliebigen Knotenpunkt aus über beide Netzwerkverbindungen an die redundante Verbindungseinrichtung gelangt. Dies ist jedoch gleichbedeutend damit, daß im Vernetzungssystem keine Unterbrechungen auftreten. In diesem Falle wird also die redundante Strecke der redundanten Verbindungseinrichtung unterbrochen, wodurch sichergestellt ist, daß keine Ringverbindung entsteht. Tritt dagegen innerhalb eines vorgegebenen Zeitraumes nur an einem Anschluß der redundanten Verbindungseinrichtung ein Datensignal auf, bedeutet dies, daß das an einem beliebigen Knotenpunkt eingespeiste Datensignal von diesem nur in einer Richtung transportiert wird, wogegen in der anderen Richtung eine Unterbrechung vorliegen muß. In diesem Falle wird die redundante Strecke der redundanten Verbindungseinrichtung durchgeschaltet und das Vernetzungssystem arbeitet wieder in einwandfreiem Zustand.

Vorteilhaft ist es dabei, den vorgegebenen Zeitraum, während dem ein Datensignal an den beiden mit dem Vernetzungssystem verbundenen Anschlüssen der redundanten Verbindungseinrichtung gleichzeitig auftritt, größer als den größten Laufzeitversatz eines Datensignals im Vernetzungssystem zu wählen. Damit ist sichergestellt, daß ein Datensignal bzw. ein Datenpaket, das an einer beliebigen Stelle des Vernetzungssystems eingespeist wurde, innerhalb des vorgegebenen Zeitraums an beiden Anschlüssen der redundanten Verbindungseinrichtung angekommen ist. Eine Unterbrechung im Vernetzungssystem liegt daher nicht vor und die redundante Strecke der redundanten Verbindungseinrichtung kann in den nicht-leitenden Zustand gebracht bzw. gehalten werden. Bei Verwendung eines CSMA/CD-(Carrier Sense Multiple Access/Collision Detection)-Verfahrens ist der vorgegebene Zeitraum vorzugsweise größer als die Zeitdauer gewählt, die der Hälfte der kleinsten zulässigen Paketlänge entspricht. Dieses Kriterium ist besonders vorteilhaft, weil das CSMA/CD-Zugriffsverfahren so konzipiert ist, daß ein Mehrfachzugriff auf das Verfahren durch mehrere Teilnehmer gleichzeitig überall im Netzwerk erkannt werden muß, was dann sichergestellt ist, wenn die Forderung dieses Zugriffsverfahrens eingehalten wird, daß nämlich die größte Laufzeit zwischen zwei beliebigen Teilnehmern nicht größer als die Zeitdauer sein darf, die der Hälfte der kleinsten zulässigen Paketlänge entspricht. Wenn im Vernetzungssystem also keine Unterbrechung auftritt, muß auf Grund der genannten Forderung dieses Zugriffsverfahrens innerhalb einer Zeitdauer, die der Hälfte der kleinsten zulässigen Paketlänge entspricht, von beiden Seiten her ein Datensignal an der redundanten Verbindungseinrichtung auftreten.

Eine weitere alternative oder zusätzliche Ausführung des erfindungsgemäßen Verfahrens besteht darin, daß die redundante Verbindungseinrichtung prüft, ob ein Datensignal länger als die dem größten zulässigen Datenpaket entsprechende Zeitdauer ist. Wenn das der Fall ist, bedeutet dies, daß ein Datenpaket im Vernetzungssystem innerhalb einer geschlossenen Ringverbindung umlaufen muß. Gemäß einer weiteren Ausführungsform der Erfindung im Zusammenhang mit dieser Prüfung besteht darin, daß die redundante Verbindungseinrichtung deaktiviert, die redundante Strecke also unterbrochen wird, wenn festgestellt wird, daß das Datensignal länger als die dem größten zulässigen Datenpaket entsprechende Zeitdauer ist. Damit wird sichergestellt, daß ein geschlossener Verbindungsring aufgehoben wird, der beispielsweise dann entsteht, wenn nach einer vorausgegangenen Unterbrechung im Vernetzungssystem diese Unterbrechung wieder beseitigt wurde.

Für den umgekehrten Fall, wenn also ein Datensignal von der redundanten Verbindungseinrichtung festgestellt wurde, das kürzer als die dem größten zulässigen Datenpaket entsprechende Zeitdauer ist, ist dies ein Hinweis darauf, daß keine Unterbrechungen im Vernetzungssystem vorliegen, so daß die redundante Strecke der redundanten Verbindungseinrichtung unterbrochen sein bzw. bleiben kann.

Besonders vorteilhaft ist es weiterhin, wenn die redundante Verbindungseinrichtung ermittelt, ob ein Datensignal kürzer als die dem kleinsten zulässigen Datenpaket entsprechende Zeitdauer ist. Durch Kollisionen, fehlerhafte, am Netz angeschlossene Datenstationen oder sonstige Störungen können im Vernetzungssystem Datenpaket-Fragmente auftreten, deren Zeitdauer kürzer als die dem kleinsten zulässigen Datenpaket entsprechende Zeitdauer ist. Es ist daher möglich, daß diese Datenpaket-Fragmente an den Anschlüssen der redundanten Verbindungseinrichtung nicht gleichzeitig auftreten, so daß diese einen geschlossenen Ring nicht erkennen kann. Dieser Tatsache trägt die letztgenannte Ausführungsform Rechnung, die kürzere Datensignale als die dem kleinsten zulässigen Datenpaket entsprechende Zeitdauer ermittelt. Gemäß einer weiteren damit zusammenhängenden Ausführungsform der Erfindung wird die redundante Verbindungseinrichtung deaktiviert, deren redundante Strecke also abgeschaltet, wenn eine vorgegebene Anzahl an derartigen Datenpaket-Fragmenten auftritt. Vorteilhaft ist es dabei, wenn die vorgegebene Anzahl an Datenpaket-Fragmenten einstellbar ist.

Eine weitere sehr vorteilhafte Ausführungsform der Erfindung besteht darin, daß die redundante Verbindungseinrichtung ermittelt, ob im Vernetzungssystem eine Datensignalkollision vorliegt. Eine solche ist dann gegeben, wenn gleichzeitig ein Datensignal-Sendevorgang und ein Datensignal-Empfangsvorgang stattfindet. Wenn eine vorgegebene Anzahl an Datensignalkollisionen festgestellt wurde, wird die redundante Verbindungseinrichtung deaktiviert, der geschlossene Verbindungsring also unterbrochen. Auf diese Weise ist es wiederum möglich, durch ein weiteres Kriterium sicherzustellen, daß kein geschlossener Ring im Vernetzungssystem auftritt.

Gemäß einer weiteren Ausführungsform der Erfindung wird die redundante Verbindungseinrichtung dagegen aktiviert, die redundante Verbindungsstrecke also durchgeschaltet, wenn innerhalb eines vorgegebenen Zeitraums keine Datensignalkollisionen ermittelt werden, was ein Hinweis darauf ist, daß im Vernetzungssystem an irgendeiner Stelle eine Unterbrechung vorliegt.

Gemäß einer sehr vorteilhaften Weiterbildung der Erfindung ermittelt die redundante Verbindungseinrichtung, ob die Dauer von Datensignalkollisionen größer als ein vorgegebener Zeitraum ist.

Bei dem CSMA/CD-Zugriffsverfahren kann im ungestörten Betrieb, also ohne Auftreten einer Unterbrechung im Vernetzungssystem, die Dauer einer Kollision die der Hälfte der kleinsten zulässigen Paketlänge entsprechende Zeitdauer nicht überschreiten, weil die an einer Kollision beteiligten Datenstationen ihren Sendeversuch einstellen, nachdem sie die Kollision erkannt haben.

Besteht dagegen in einem Vernetzungssystem ein geschlossener Verbindungsring, können Datenpakete gegenläufig umlaufen und dadurch Kollisionen mit einer Dauer erzeugen, die über der bei fehlerfreiem Betrieb auftretenden maximalen Kollisionsdauer liegt. Gemäß der letztgenannten Ausführungsform wird daher die Dauer von Datensignalkollisionen ermittelt, die größer als ein vorgegebener Zeitraum, vorzugsweise größer als die halbe Dauer des kleinsten zulässigen Datenpakets und im Falle der Verwendung des CSMA/CD-Verfahrens größer als 25 µs ist. Tritt eine derartige überlange Kollision auf, weist dies auf eine geschlossene Ringverbindung hin, so daß die redundante Verbindungeinrichtung gemäß einer weiteren Ausführungsform in diesem Falle deaktiviert, die redundante Strecke also unterbrochen wird.

Die gestellte Aufgabe wird insbesondere auch durch eine Anordnung gemäß dem Anspruch 17 gelöst.

Die redundante Verbindungseinrichtung wird in den inaktiven Zustand umgeschaltet, wenn sie keine Unterbrechung ermittelt. Dies bedeutet, daß dann, wenn eine vorausgegangene Unterbrechung - welcher Art auch immer - im Vernetzungssystem aufgehoben wurde, keine geschlossene Ringverbindung auftritt, die zu Fehlfunktionen im Netz führt.

Vorteilhafterweise ist die redundante Verbindungseinrichtung zwischen zwei Knotenpunkten eines Vernetzungssystems vorgesehen, wobei auch mehr als eine redundante Verbindungseinrichtung im Vernetzungssystem eingesetzt werden können.

Gemäß einer vorteilhaften Weiterbildung der Erfindung besteht die redundante Verbindungseinrichtung aus zwei durch eine redundante Verbindungsstrecke untereinander verbundenen Interface-Karten.

Vorteilhaft ist es dabei, wenn die jeweilige redundante Interface-Karte bei Aktivierung der redundanten Verbindungseinrichtung in den segmentierten Zustand und bei Deaktivierung der redundanten Verbindungseinrichtung in den nicht segmentierten Zustand versetzt ist.

Vorzugsweise weist die redundante Verbindungseinrichtung einen Watch-Dog-Timer auf, der die Dauer eines empfangenen und/oder gesendeten Datensignals feststellt. Ein derartiger Watch-Dog-Timer kann zur Überwachung und Feststellung der Datenpaket-Dauer entsprechend den vorausgegangenen Ausführungen eingesetzt werden.

Die redundante Verbindungseinrichtung weist vorzugsweise eine Fragment-Erkennungsschaltung auf, die Datensignale feststellt, deren Dauer kleiner als die kleinste zulässige Datensignallänge ist.

Vorteilhaft ist es weiterhin, wenn die redundante Verbindungseinrichtung eine Kollisions-Erkennungsschaltung aufweist, die einen Mehrfachzugriff der Rechner- und/oder Rechnernetzwerke auf das Vernetzungssystem ermittelt. Die Ausgangssignale der Kollisions-Erkennungsschaltung können wiederum zur Aktivierung und/oder Deaktivierung der redundanten Verbindungseinrichtung, d. h. zur Durchschaltung oder Unterbrechung der redundanten Strecke verwendet werden.

Die redundante Verbindungseinrichtung weist vorzugsweise zusätzlich zu den genannten übrigen Schaltungsteilen eine Kollisionsdauer-Erkennungsschaltung auf, die die Dauer der Kollision ermittelt. Bei Vorliegen eines Ausgangssignals der Kollisionsdauer-Erkennungsschaltung wird dann die redundante Verbindungsstrecke der redundanten Verbindungseinrichtung in den nicht-leitenden Zustand versetzt.

Vorteilhaft ist es weiterhin, wenn die redundante Verbindungseinrichtung eine Freigabeschaltung aufweist, die die Segmentierung der redundanten Verbindungseinrichtung aufhebt, wenn ein Datenpaket von mindestens 51,2 µs Dauer kollisionsfrei empfangen oder gesendet wurde.

Die Erfindung wird nachstehend anhand der Zeichnungen beispielsweise näher erläutert. Es zeigen:
- Fig. 1: eine schematische Darstellung eines herkömmlichen Vernetzungssystems von Netzwerksegmenten unter Verwendung von Bridges;
- Fig. 2: ein herkömmliches Vernetzungssystem mit aktiven Sternkopplern und Lichtwellenleitern unter Verwendung einer redundanten Strecke;
- Fig. 3: ein Ausführungsbeispiel des erfindungsgemäßen Vernetzungssystems im Zusammenhang mit einem optischen Netzwerk;
- Fig. 4: eine schematische Darstellung einer erfindungsgemäßen redundanten Verbindungseinrichtung, und
- Fig. 5: ein schematisches Blockschaltbild, welches ein Schaltungsbeispiel für die redundante Verbindungseinrichtung wiedergibt.

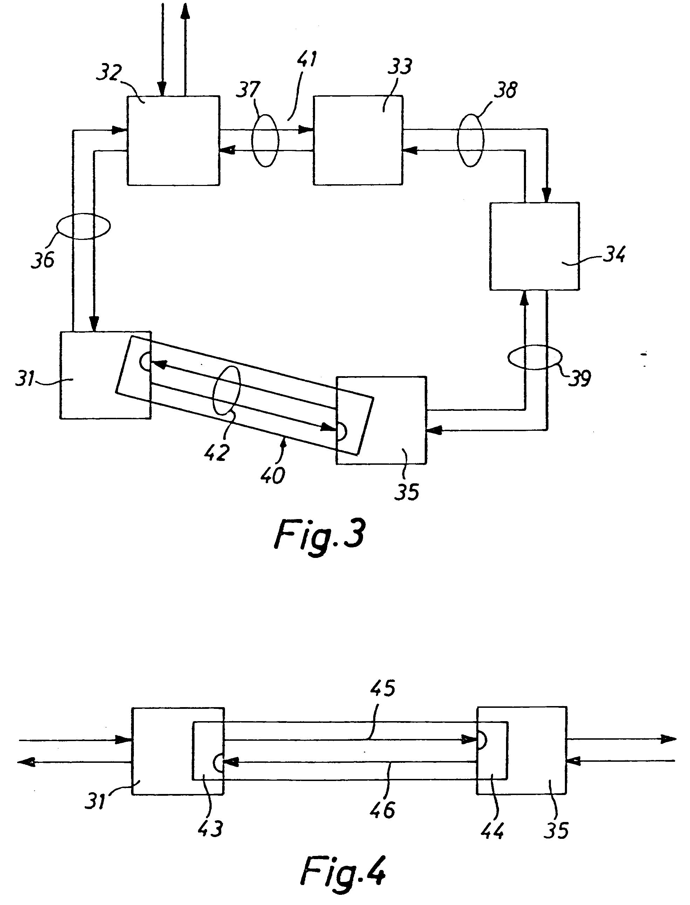

In Fig. 3 ist ein Ausführungsbeispiel des erfindungsgemäßen Verfahrens bzw. des erfindungsgemäßen Vernetzungssystems schematisch im Zusammenhang mit einem optischen Netzwerk mit aktiven Sternkopplern wiedergegeben. Selbstverständlich kann das erfindungsgemäße Verfahren auch bei anderen Netzwerken und Vernetzungen eingesetzt werden.

Sternkoppler 31, 32, 33, 34 und 35 sind in der dargestellten Weise über Verbindungsleitungen 36, 37, 38, 39 miteinander in Reihe verbunden. Die Verbindungsleitungen 36, 37, 38 und 39 umfassen jeweils wenigstens zwei Leitungen für das Übertragen von Datensignalen, im nachfolgenden auch mit Datenpaketen bezeichnet, in Richtung und Gegenrichtung. Die einzelnen Sternkoppler sind mit Teilnehmern oder Datenstationen verbunden, wie dies schematisch für den Sternkoppler 32 in Fig. 3 angedeutet ist. Zwischen dem Sternkoppler 31 und 35 befindet sich eine redundante Verbindungseinrichtung 40 gemäß der vorliegenden Erfindung, die die Sternkoppler 31 und 35 - wie dies im weiteren noch erläutert wird - wahlweise verbindet.

Bei nicht vorhandener redundanter Verbindungseinrichtung 40 bzw. bei inaktiver, d. h. nicht-leitender Verbindung zwischen den Sternkopplern 31 und 35 werden Datensignale, die beispielsweise von einem mit dem Sternkoppler 32 verbundenen Teilnehmer abgesandt werden, über die Verbindungsleitung 36 zum Sternkoppler 31 und über die Verbindungsleitung 37 zum Sternkoppler 33, weiter über die Verbindungsleitung 38 zum Sternkoppler 34 und schließlich über die Verbindungsleitung 39 zum Sternkoppler 35 geführt. Sämtliche Sternkoppler und damit Teilnehmer des Vernetzungssystems haben bei ordnungsgemäßem Betrieb derselben daher Zugriff zu den Daten. Ist dagegen eine Verbindungsleitung, beispielsweise die Verbindungsleitung 37, unterbrochen (in Fig. 3 durch einen schrägen Doppelstrich 41 dargestellt), gelangt das von dem mit dem Sternkoppler 32 verbundenen Teilnehmer abgesandte Datenpaket über die Verbindungsleitung 36 nur noch an den Sternkoppler 31. Das Vernetzungssystem ist daher unterbrochen und der Zugriff aller Teilnehmer auf alle Sternkoppler bzw. Datenstationen ist nicht mehr möglich.

Die redundante Verbindungseinrichtung 40 hat bei Auftreten einer Unterbrechung im Vernetzungssystem die Aufgabe, diese Unterbrechung festzustellen und in Abhängigkeit davon eine redundante Strecke zwischen den Sternkopplern 31 und 35 zu aktivieren bzw. durchzuschalten, so daß auch bei Auftreten einer Unterbrechung 41 in der Verbindungsleitung 37 alle Sternkoppler wieder miteinander in Datenaustausch treten können.

Wie bereits ausgeführt wurde, erkennt die redundante Verbindungseinrichtung 40 eine Unterbrechung im Vernetzungssystem dadurch, daß innerhalb eines vorgegebenen Zeitraumes nicht gleichzeitig an ihren beiden Anschlüssen, die mit dem Vernetzungssystem, im vorliegenden Fall mit den Sternkopplern 31 und 35 verbunden sind, Datenpakete auftreten, weil durch die Unterbrechung 41 in der Verbindungsleitung 37 Daten nur an den Sternkoppler 31, nicht aber an den Sternkoppler 35 gelangen. Dadurch wird die redundante Verbindungseinrichtung 40 aktiviert, d. h. die redundante Verbindungsstrecke 42 wird durchgeschaltet. Das Netzwerk hat sich somit wieder vollständig rekonfiguriert und alle Teilnehmer sind wieder erreichbar.

Der analoge Vorgang läuft ab, wenn beispielsweise Daten über den Sternkoppler 34 eingespeist werden, die auf Grund der Unterbrechung 41 nur an den Sternkoppler 35, jedoch nicht an den Sternkoppler 31 gelangen.

Ist die Verbindungsleitung 37 nach einer vorausgegangenen Unterbrechung wieder leitend, gelangen von beiden Seiten her Datensignale an die redundante Verbindungseinrichtung 40, die in Abhängigkeit davon deaktiviert wird, d. h. die redundante Verbindungsstrecke 42 wird unterbrochen bzw. außer Funktion gesetzt. Würde dies nicht erfolgen, so könnten Datenpakete in einem geschlossenen Ring umlaufen, was nach dem CSMA/CD-Verfahren den Zugriff auf das Vernetzungssystem unmöglich machen würde.

Die redundante Verbindungseinrichtung 40 kann gemäß dem in Fig. 4 schematisch dargestellten Ausführungsbeispiel aus redundanten als Teil der Sternkoppler 31 und 35 ausgebildeten Interface-Karten 43, 44 und einer diese verbindenden redundanten Verbindungsstrecke 45, 46 bestehen. In den redundanten Interface-Karten 43, 44 erfolgt die Prüfung der über die redundante Verbindungsstrecke 45, 46 empfangenen Signale, ob am Sender der redundanten Interface-Karten 43, 44 das gleiche Datenpaket über die eigentliche Vernetzungsleitung angekommen ist. Weil die gesamte Laufzeit des Datenpakets durch das Vernetzungssystem bei Verwendung des CSMA/CD-Zugriffsverfahrens - wie bereits ausgeführt - immer kürzer als die halbe Paketlänge ist, sendet und empfängt die redundante Interface-Karte 43 bzw. 44, also immer gleichzeitig während eines Datenpakets für den Fall, daß im Vernetzungssystem keine Unterbrechung auftritt. Wenn eine Unterbrechung 41 vorliegt, tritt das Datenpaket nur am Sternkoppler 31 auf und wird über die redundante Verbindunsstrecke 45, 46 zur redundanten Interface-Karten 44 geleitet, die im Sternkoppler 35 vorgesehen ist. Auf Grund der Unterbrechung 41 wird jedoch nicht gleichzeitig ein Datenpaket vom Sternkoppler 35 zur Interface-Karte 43 des Sternkopplers 31 gesendet. Diese Information des nicht gleichzeitigen Auftretens der Datenpakete an beiden Anschlüssen der redundanten Verbindungseinrichtung 40, wird dazu ausgenutzt, die Segmentierung der Empfänger der redundanten Interface-Karten 43, 44 aufzuheben und die redundante Verbindungsstrecke 45, 46 zwischen dem Sternkoppler 31 und dem Sternkoppler 35 durchzuschalten.

Ist die zuvor unterbrochene Leitung 37 des Vernetzungssystems wieder geschlossen worden, so entsteht ein in beiden Umlaufrichtungen geschlossener Verbindungsring im Vernetzungssystem. Die redundanten Interface-Karten 43, 44 umfassen Schaltungsteile, die feststellen, wenn der Ring geschlossen ist. Tritt dieser Zustand auf, gehen die redundanten Interface-Karten 43, 44 in den segmentierten Zustand über, d. h. die Daten werden nach wie vor über die redundante Verbindungsstrecke 45 bzw. 46 gesendet, die jeweiligen Empfänger der redundanten Interface-Karten geben die Daten jedoch nicht weiter, da die Karte sich im segmentierten Zustand befindet. Der Ausgangszustand ist damit wieder hergestellt.

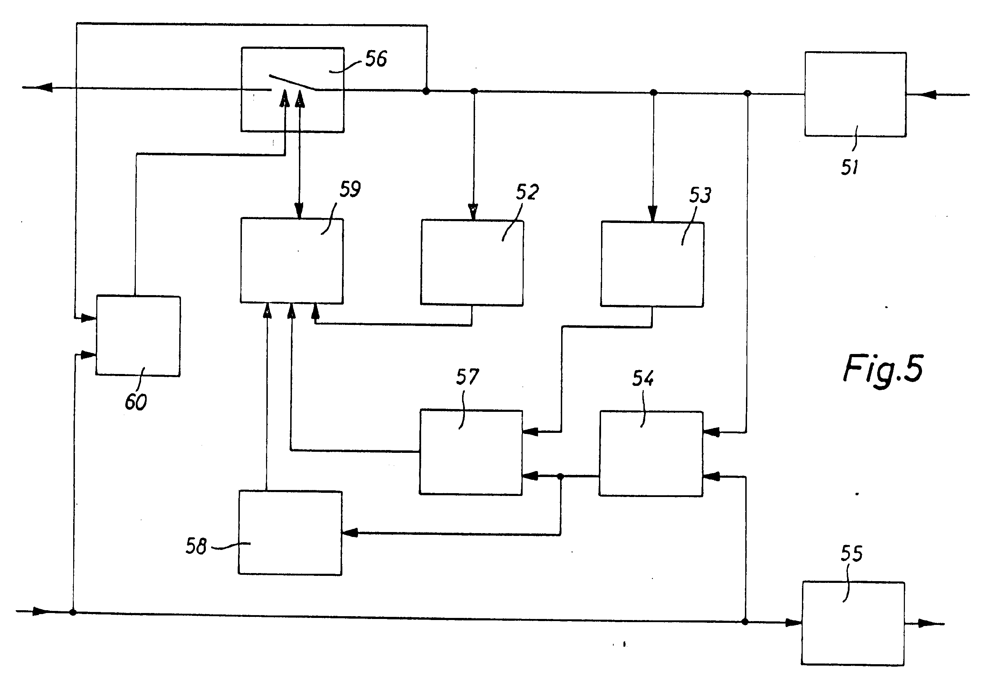

Fig. 5 zeigt eine schematische Schaltungsanordnung, mit der die Interface-Karte erkennen kann, daß im Vernetzungssystem eine geschlossene Ringverbindung existiert.

Über einen Empfänger 51 gelangen die Empfangsdaten an einen Watch-Dog-Timer 52, eine Fragment-Erkennungsschaltung 53 und eine Kollisions-Erkennungsschaltung 54. Der Kollisions-Erkennungsschaltung 54 werden weiterhin die Sendedaten der redundanten Interface-Karte zugeleitet, die andererseits über den Sender 55 in Richtung des Sternkopplers gesendet werden, von dem der Empfänger 51 seine Empfangsdaten erhält.

Im Empfangsdaten-Signalweg liegt ein Schalter 56, dessen Ausgang mit der Verteilebene des Sternkopplers verbunden ist. Die Ausgangssignale der Fragment-Erkennungsschaltung 53 und der Kollisions-Erkennungsschaltung 54 gelangen an einen Fehlerzähler 57. Das Ausgangssignal der Kollisions-Erkennungsschaltung 54 wird weiterhin einer Kollisionsdauer-Erkennungsschaltung 58 zugeleitet. Die Ausgänge des Watch-Dog-Timers 52, der Fehlerzählschaltung 57 und der Kollisionsdauer-Erkennungsschaltung 58 sind mit den Eingängen eines ODER-Glieds 59 verbunden, dessen Ausgangssignal den Schalter 56 in den nicht leitenden Zustand versetzt. Ein Ausgangssignal einer eine Schaltungslogik aufweisenden Freigabeschaltung 60, deren erster Eingang mit dem Ausgang des Empfängers 51 und deren zweiter Eingang mit dem Eingang des Senders 55 verbunden ist, versetzt den Schalter 56 in den leitenden Zustand.

Der Watch-Dog-Timer 52 überwacht die Dauer des empfangenen Datensignals bzw. Datenpakets. Überschreitet die Paketlänge einen vorgegebenen Schwellwert, gibt der Watch-Dog-timer 52 ein Ausgangssignal an das ODER-Glied 59 ab, so daß der Schalter 56 in den nicht-leitenden Zustand geschaltet wird. Der für den Watch-Dog-Timer 52 vorgesehene Schwellwert für die empfangene Paketlänge ist größer gewählt als die größte zulässige Paketlänge. Wie bereits ausgeführt wurde, ist die Tatsache dafür, daß eine auftretende Paketlänge größer als die größte zulässige Paketlänge ist, ein Hinweis darauf, daß eine Ringverbindung im Vernetzungssystem vorliegt. Durch diese Feststellung mittels des Watch-Dog-Timers 52 wird die redundante Interface-Karte in den segmentierten Zustand gebracht und auf diese Weise ein geschlossener Verbindungsring unterbrochen.

Die Fragment-Erkennungsschaltung 53 hat die Aufgabe, Paketfragmente zu erkennen. Durch Kollisionen, fehlerhaft am Netz angeschlossene Datenstationen oder sonstige Störungen können Paketfragmente entstehen, deren Dauer kleiner als die kleinste zulässige Paketdauer ist. Im Falle des CSMA/CD-Zugriffsverfahrens ist diese kleinste zulässige Paketdauer 51,2 µs (was 64 Byts entspricht). Je nach der Dauer dieses Datenpaket-Fragments und den Laufzeiten in einem geschlossenen Verbindungsring kann das Datensignal-Fragment den Sende- und Empfangskanal einer redundanten Interface-Karte zeitversetzt, d. h. nicht überlappend, passieren. Dadurch ist es der redundanten Interface-Karte nicht möglich, zu erkennen, ob ein geschlossener Verbindungsring vorliegt.

Die Fragment-Erkennungsschaltung 53 stellt nun die Dauer eines empfangenen Datenpakets fest. Unterschreitet die festgestellte Dauer des empfangenen Pakets die Dauer des kleinsten zulässigen Datenpakets - bei Verwendung des CSMA/CD-Zugriffsverfahrens sind dies 51,2 µs - wird ein Zählimpuls für die Fehlerzählschaltung 57 erzeugt. Überschreitet der Stand der Fehlerzählschaltung 57 einen vorgegebenen, wählbaren Wert, gibt diese ein Ausgangssignal ab, das den Schalter 56 über das ODER-Glied 59 erreicht und ihn in den nicht-leitenden Zustand versetzt, so daß die redundante Interface-Karte segmentiert ist.

Die Fragment-Erkennungsschaltung 53 ermöglicht also das Unterbrechen eines geschlossenen Verbindungsrings auch mit Datenpaket-Fragmenten.

Beim CSMA/CD-Zugriffsverfahren brechen die an einer Kollision beteiligten Datenstationen bei ungestörtem Betrieb des Vernetzungssystems ihren Sendeversuch ab, sobald sie die Kollision erkannt haben. Da für das CSMA/CD-Zugriffsverfahren die Bedingung gilt, daß die maximale Laufzeit zwischen zwei Teilnehmern nicht größer als die Hälfte der kleinsten zulässigen Paketlänge sein darf, um im gesamten Vernetzungssystem einen Mehrfachzugriff erkennen zu können, und da die kleinste zulässige Paketlänge 64 Bytes entsprechend 51,2 µs ist, kann die Kollisionsdauer ca. 25 µs nicht überschreiten. Liegt jedoch ein Verbindungsring im Vernetzungssystem vor, können Datenpakete gegenläufig umlaufen, so daß Kollisionsdauern entstehen, die über 25 µs liegen. Überschreitet die Dauer der Kollision also einen derartigen Grenzwert, gibt die Kollisionsdauer-Erkennung 58 ein Ausgangssignal ab, das wiederum den Schalter 56 in den nicht leitenden Zustand versetzt. Die redundante Interface-Karte wird segmentiert und der geschlossene Verbindungsring unterbrochen.

Die Kollisions-Erkennungsschaltung 54 ist dafür vorgesehen, das gleichzeitige Senden und Empfangen von Daten zu ermitteln. Jede Kollision bewirkt in der Fehlerzählschaltung 57 einen Weiterzählimpuls. Überschreitet der Stand der Fehlerzählschaltung 57 einen vorgegebenen, einstellbaren Wert, gibt diese ebenfalls ein Ausgangssignal ab, das den Schalter 56 in den nicht leitenden Zustand versetzt. Wiederum wird die redundante Interface-Karte 43 bzw. 44 segmentiert und der geschlossene Verbindungsring unterbrochen.

Bei der in Fig. 5 dargestellten Ausführungsform sind also drei Kriterien vorgesehen, die alternativ die Segmentierung der redundanten Interface-Karte 43 bzw. 44 bewirken. Es ist jedoch auch möglich, weitere Kriterien für das Unterbrechen eines geschlossenen Verbindungsrings vorzusehen. Die Freigabeschaltung 60 hebt diese Segmentierung auf, wenn ein Datenpaket von mindestens 51,2 µs Dauer kollisionsfrei empfangen oder gesendet wurde.

## Patentansprüche

1. Verfahren zur Sicherung der Datenübertragung in einem linearen Rechnernetz mit CSMA/CD-(Carrier Sense Multiple Access/Collision Detection)-Zugriffsverfahren, bei dem das Auftreten einer Unterbrechung im Rechnernetz ermittelt und in Abhängigkeit davon eine redundante Verbindungseinrichtung aktiviert wird, dadurch gekennzeichnet, daß die redundante Verbindungseinrichtung prüft, ob an ihren beiden mit dem Rechnernetz verbundenen Anschlüssen ein übertragenes Datensignal innerhalb eines vorgegebenen Zeitraums gleichzeitig auftritt und abhängig von dem Ergebnis der Prüfung die redundante Verbindungseinrichtung entweder aktiviert oder deaktiviert wird.

2. Verfahren nach Anspruch 1, dadurch gekennzeichnet, daß die redundante Verbindungseinrichtung aktiviert wird, wenn an ihren beiden Anschlüssen ein Datensignal innerhalb eines vorgegebenen Zeitraums nicht gleichzeitig auftritt.

3. Verfahren nach Anspruch 1, dadurch gekennzeichnet, daß die redundante Verbindungseinrichtung deaktiviert wird, wenn an ihren beiden Anschlüssen ein Datensignal innerhalb eines vorgegebenen Zeitraums gleichzeitig auftritt.

4. Verfahren nach einem der Ansprüche 1 bis 3, dadurch gekennzeichnet, daß der vorgegebene Zeitraum größer als der größte Laufzeitversatz eines Datensignals im Rechnernetz ist.

5. Verfahren nach einem der Ansprüche 1 bis 3, dadurch gekennzeichnet, daß der vorgegebene Zeitraum größer als die Zeitdauer ist, die der Hälfte der kleinsten zulässigen Paketlänge entspricht.

6. Verfahren nach einem der Ansprüche 1 bis 5, dadurch gekennzeichnet, daß die redundante Verbindungseinrichtung prüft, ob ein Datensignal länger als die dem größten zulässigen Datenpaket entsprechende Zeitdauer ist.

7. Verfahren nach Anspruch 6, dadurch gekennzeichnet, daß die redundante Verbindungseinrichtung deaktiviert wird, wenn ein Datensignal länger als die den größten zulässigen Datenpaket entsprechende Zeitdauer ist.

8. Verfahren nach einem der Ansprüche 1 bis 7, dadurch gekennzeichnet, daß die redundante Verbindungseinrichtung ermittelt, ob ein Datensignal kürzer als die dem kleinsten zulässigen Datenpaket entsprechende Zeitdauer ist.

9. Verfahren nach Anspruch 8, dadurch gekennzeichnet, daß die redundante Verbindungseinrichtung deaktiviert wird, wenn eine vorgegebene Anzahl an Datensignalen auftritt, die kürzer als die dem kleinsten zulässigen Datenpaket entsprechende Zeitdauer ist.

10. Verfahren nach Anspruch 9, dadurch gekennzeichnet, daß die vorgegebene Anzahl an Datensignalen einstellbar ist.

11. Verfahren nach einem der Ansprüche 1 bis 10, dadurch gekennzeichnet, daß die redundante Verbindungseinrichtung ermittelt, ob im Rechnernetz gleichzeitig ein Datensignal-Sende- und ein Datensignal-Empfangsvorgang vorliegt.

12. Verfahren nach Anspruch 11, dadurch gekennzeichnet, daß die redundante Verbindungseinrichtung deaktiviert wird, wenn eine vorgegebene Anzahl an gleichzeitigen Datensignal-Sende- und -Empfangsvorgängen vorliegt.

13. Verfahren nach einem der Ansprüche 1 bis 12, dadurch gekennzeichnet, daß die redundante Verbindungseinrichtung ermittelt, ob die Dauer gleichzeitig auftretender Datensignal-Sende- und -Empfangvorgänge größer als ein vorgegebener Zeitraum ist.

14. Verfahren nach Anspruch 13, dadurch gekennzeichnet, daß die redundante Verbindungseinrichtung deaktiviert wird, wenn die Dauer der gleichzeitig auftretenden Datensignal-Sende- und -Empfangsvorgänge größer als der vorgegebene Zeitraum ist.

15. Verfahren nach Anspruch 13 oder 14, dadurch gekennzeichnet, daß der vorgegebene Zeitraum kleiner oder gleich der halben Dauer des kleinsten zulässigen Datenpakets ist.

16. Verfahren nach einem der Ansprüche 13 bis 15, dadurch gekennzeichnet, daß der vorgegebene Zeitraum kleiner als 25,2 µs ist.

17. Anordnung zur Sicherung der Datenübertragung in einem linearen Rechnernetz mit CSMA/CD-(Carrier Sense Multiple Access/Collision Detection)-Zugriffsverfahren und mit eine redundanten Verbindungseinrichtung (40), zur Durchführung des Verfahrens nach wenigstens einem der Ansprüche 1 - 16, dadurch gekennzeichnet, daß die redundante Verbindungseinrichtung (40) Schaltungselemente aufweist, die prüfen, ob an den beiden mit dem Rechnernetz verbundenen Anschlüssen der Verbindungseinrichtung (40) ein übertragenes Datensignal innerhalb eines vorgegebenen Zeitraums gleichzeitig auftritt, und daß eine Aktivierungsschaltung vorgesehen ist, die die redundante Verbindungseinrichtung (40) in Abhängigkeit vom Ergebnis der Prüfung entweder aktiviert oder deaktiviert.

18. Anordnung nach Anspruch 17, dadurch gekennzeichnet, daß die redundante Verbindungseinrichtung (40) in den inaktiven Zustand umschaltet, wenn sie keine Unterbrechung ermittelt.

19. Anordnung nach Anspruch 17 und 18, dadurch gekennzeichnet, daß die redundante Verbindungseinrichtung (40) zwischen zwei Knotenpunkten (31, 35) eines Rechnernetzes vorgesehen ist.

20. Anordnung nach einem der Ansprüche 17 bis 19, dadurch gekennzeichnet, daß die redundante Verbindungseinrichtung (40) durch zwei redundante Interface-Karten (43, 44) mit einer diese verbindenden redundanten Verbindungsstrecke (45, 46) gebildet ist.

21. Anordnung nach Anspruch 20, dadurch gekennzeichnet, daß die jeweilige redundante Interface-Karte (43, 44) bei Aktivierung der redundanten Verbindungseinrichtung (40) in den segmentierten Zustand und bei Deaktivierung der redundanten Verbindungseinrichtung (40) in den nicht-segmentierten Zustand versetzt ist.

22. Anordnung nach einem der Ansprüche 17 bis 21, dadurch gekennzeichnet, daß die redundante Verbindungseinrichtung (40) einen Watch-Dog-Timer (52) aufweist, der die Dauer eines empfangenen und/oder gesendeten Datensignals feststellt.

23. Anordnung nach einem der Ansprüche 17 bis 22, dadurch gekennzeichnet, daß die redundante Verbindungseinrichtung (40) eine Fragment-Erkennungsschaltung (53) aufweist, die Datensignale feststellt, deren Dauer kleiner als die kleinste zulässige Datensignallänge ist.

24. Anordnung nach einem der Ansprüche 17 bis 23, dadurch gekennzeichnet, daß die redundante Verbindungseinrichtung (40) eine Kollisions-Erkennungsschaltung (54) aufweist, die einen Mehrfachzugriff der Rechner und/oder Rechnernetzwerke auf das Rechnernetz ermittelt.

25. Anordnung nach Anspruch 24, dadurch gekennzeichnet, daß die redundante Verbindungseinrichtung (40) eine Kollisionsdauer-Erkennungsschaltung (58) aufweist, die die Dauer der Kollision ermittelt.

26. Anordnung nach einem der Ansprüche 17 bis 25, dadurch gekennzeichnet, daß die redundante Verbindungseinrichtung (40) eine Freigabeschaltung (60) aufweist.

27. Anordnung nach einem der Ansprüche 17 bis 26, dadurch gekennzeichnet, daß die redundante Verbindungseinrichtung an einer beliebigen Stelle des Rechnernetzes vorgesehen ist.

28. Anordnung nach einem der Ansprüche 17 bis 27, dadurch gekennzeichnet, daß wenigstens zwei redundante Verbindungseinrichtungen in einem Rechnernetz vorgesehen sind.

29. Anordnung nach einem der Ansprüche 17 bis 28, dadurch gekennzeichnet, daß ein Hauptverbindungsweg der redundanten Verbindungseinrichtung zur Aktivierung bzw. Deaktivierung derselben in den leitenden bzw. in den nicht-leitenden Zustand versetzt ist.

## Claims

1. Method for safeguarding the transmission of data in a linear computer net using the CSMA/CD (Carrier Sense Multiple Access/Collision Detection) accessing process, in which the occurrence of an interruption in the computer net is detected and a redundant connection device is activated in dependence thereon, characterised in that, the redundant connection device checks whether a transmitted data signal appears simultaneously at its two terminals connected to the computer net within a predetermined period and the redundant connection device is either activated or deactivated in dependence on the result of the check.

2. Method in accordance with Claim 1, characterised in that, the redundant connection device is activated if a data signal does not appear simultaneously at its two terminals within a predetermined period.

3. Method in accordance with Claim 1, characterised in that, the redundant connection device is deactivated if a data signal does appear simultaneously at its two terminals within a predetermined period.

4. Method in accordance with any of Claims 1 to 3, characterised in that, the predetermined period is greater than the largest transit time displacement of a data signal in the computer net.

5. Method in accordance with any of the Claims 1 to 3, characterised in that, the predetermined period is greater than the time period which corresponds to half the smallest permissible packet length.

6. Method in accordance with any of the Claims 1 to 5, characterised in that, the redundant connection device checks whether a data signal is longer than the time period which corresponds to the largest permissible data packet.

7. Method in accordance with Claim 6, characterised in that, the redundant connection device is deactivated if a data signal is longer than the time period which corresponds to the largest permissible data packet.

8. Method in accordance with any of the Claims 1 to 7, characterised in that, the redundant connection device determines whether a data signal is shorter than the time period which corresponds to the smallest permissible data packet.

9. Method in accordance with Claim 8, characterised in that, the redundant connection device is deactivated if a predetermined number of data signals occurs which is less than the time period which corresponds to the smallest permissible data packet.

10. Method in accordance with Claim 9, characterised in that, the predetermined number of data signals is adjustable.

11. Method in accordance with any of the Claims 1 to 10, characterised in that, the redundant connection device determines whether a data signal transmission and a data signal reception process exist simultaneously in the computer net.

12. Method in accordance with Claim 11, characterised in that, the redundant connection device is deactivated if a predetermined number of data signal transmission and reception processes are occurring simultaneously.

13. Method in accordance with any of the Claims 1 to 12, characterised in that, the redundant connection device determines whether the duration of simultaneously occurring data signal transmission and reception processes is greater than a predetermined period.

14. Method in accordance with Claim 13, characterised in that, the redundant connection device is deactivated if the duration of the simultaneously occurring data signal transmission and reception processes is greater than the predetermined period.

15. Method in accordance with Claim 13 or 14, characterised in that, the predetermined period is less then or equal to half the duration of the smallest permissible data packet.

16. Method in accordance with any of the Claims 13 to 15, characterised in that, the predetermined period is less than 25.2 µsec.

17. Arrangement for safeguarding the transmission of data in a linear computer net using the CSMA/CD (Carrier Sense Multiple Access/Collision Detection) accessing process and including a redundant connection device (40) for carrying out the method in accordance with at least one of the Claims 1 to 16, characterised in that, the redundant connection device (40) comprises switching elements which check whether a transmitted data signal appears simultaneously at the two terminals of the connection device (40) connected to the computer net within a predetermined period and that an activating circuit is provided which either activates or deactivates the redundant connection device (40) in dependence on the result of the check.

18. Arrangement in accordance with Claim 17, characterised in that, the redundant connection device (40) switches into the inactive state if it does not detect an interruption.

19. Arrangement in accordance with Claim 17 and 18, characterised in that, the redundant connection device (40) is provided between two nodal points (31, 35) of a computer net.

20. Arrangement in accordance with any of the Claims 17 to 19, characterised in that, the redundant connection device (40) is formed by two redundant interface cards (43, 44) having a redundant connection path (45, 46) interconnecting them.

21. Arrangement in accordance with Claim 20, characterised in that, the respective redundant interface card (43, 44) is placed in the segmented state upon the activation of the redundant connection device (40) and into the non-segmented state upon the deactivation of the redundant connection device (40).

22. Arrangement in accordance with any of the Claims 17 to 21, characterised in that, the redundant connection device (40) comprises a watch-dog-timer (52) which establishes the duration of a received and/or transmitted data signal.

23. Arrangement in accordance with any of the Claims 17 to 22, characterised in that, the redundant connection device (40) comprises a fragment detecting circuit (53) which identifies data signals whose duration is less than the smallest permissible length of a data signal.

24. Arrangement in accordance with any of the Claims 17 to 23, characterised in that, the redundant connection device (40) comprises a collision detecting circuit (54) which detects a multiple access of the computers and/or computer networks to the computer net.

25. Arrangement in accordance with Claim 24, characterised in that, the redundant connection device (40) comprises a collision duration detecting circuit (58) which determines the duration of the collision.

26. Arrangement in accordance with any of the Claims 17 to 25, characterised in that, the redundant connection device (40) comprises an enabling circuit (60).

27. Arrangement in accordance with any of the Claims 17 to 26, characterised in that, the redundant connection device is provided at any arbitrary position of the computer net.

28. Arrangement in accordance with any of the Claims 17 to 27, characterised in that, at least two redundant connection devices are provided in a computer net.

29. Arrangement in accordance with any of the Claims 17 to 28, characterised in that, a main interconnection path of the redundant connection device is placed in the conductive or in the non-conductive state for activating or deactivating the latter.

## Revendications

1. Procédé de protection de la transmission de données dans un réseau linéaire d'ordinateurs avec protocole d'accès CSMA/CD (Carrier Sense Multiple Access/Collision Detection), dans lequel l'apparition d'une coupure dans le réseau d'ordinateurs est déterminée et en fonction de ceci un dispositif de connexion redondant est activé, caractérisé en ce que le dispositif de connexion redondant vérifie si à ses deux connexions reliées au réseau d'ordinateurs apparaît simultanément un signal de données transmis à l'intérieur d'un intervalle de temps donné et en fonction du résultat de la vérification, le dispositif de connexion redondant est soit activité, soit désactivé.

2. Procédé selon la revendication 1, caractérisé en ce que le dispositif de connexion redondant est activé, si à ses deux connexions n'apparaît par simultanément un signal de données, à l'intérieur d'un intervalle de temps donné.

3. Procédé selon la revendication 1, caractérisé en ce que le dispositif de connexion redondant est désactivé, si à ses deux connexions apparaît simultanément un signal de données, à l'intérieur d'un intervalle de temps donné.

4. Procédé selon l'une des revendications 1 à 3, caractérisé en ce que l'intervalle de temps donné est supérieur au plus grand décalage de durée d'un signal de données dans le réseau d'ordinateurs.

5. Procédé selon l'une des revendications 1 à 3, caractérisé en ce que l'intervalle de temps donné est supérieur à la durée qui correspond à la moitié de la plus petite longueur de paquet admissible.

6. Procédé selon l'une des revendications 1 à 5, caractérisé en ce que le dispositif de connexion redondant vérifie si un signal de données est plus long que la durée correspondant au plus grand paquet de données admissible.

7. Procédé selon la revendication 6, caractérisé en ce que le dispositif de connexion redondant est désactivé, si un signal des données est plus long à la durée correspondant au plus grand dispositif de données admissibles.

8. Procédé selon l'une des revendications 1 à 7, caractérisé en ce que le dispositif de connexion redondant détermine si un signal de données est plus court que la durée correspondant au plus petit paquet de données admissible.

9. Procédé selon la revendication 8, caractérisé en ce que le dispositif de connexion redondant est désactivé, s'il apparaît un nombre donné de signaux de données qui est plus court que la durée correspondant au plus petit paquet de données admissible.

10. Procédé selon la revendication 9, caractérisé en ce que le nombre donné de signaux de données est réglable.

11. Procédé selon l'une des revendications 1 à 10, caractérisé en ce que le dispositif de connexion redondant détermine si dans le réseau d'ordinateurs se produit simultanément une émission de signaux de données et une réception de signaux de données.

12. Procédé selon la revendication 11, caractérisé en ce que le dispositif de connexion redondant est désactivé, si on se trouve en présence d'un nombre donné d'émissions et de réceptions simultanées de signaux de données.

13. Procédé selon l'une des revendications 1 à 12, caractérisé en ce que le dispositif de connexion redondant détermine si la durée des émissions et réceptions de signaux de données se produisant simultanément, est supérieure à un intervalle de temps donné.

14. Procédé selon la revendication 13, caractérisé en ce que le dispositif de connexion redondant est désactivé, si la durée des émissions et réceptions de signaux de données se produisant simultanément, est supérieure à l'intervalle de temps donné.

15. Procédé selon les revendications 13 ou 14, caractérisé en ce que l'intervalle de temps donné est inférieur ou égal à la moitié de la durée du plus petit paquet de données admissible.

16. Procédé selon l'une des revendications 13 à 15, caractérisé en ce que l'intervalle de temps donné est inférieur à 25,2 µs.

17. Dispositif de protection de la transmission de données dans un réseau linéaire d'ordinateurs avec ptotocole d'accès CSMA/CD (Carrier Sense Multiple Access/Collision Detection) comportant un dispositif de connexion (40) redondant, pour la mise en oeuvre du procédé selon l'une au moins des revendications 1 à 16, caractérisé en ce que le dispositif de connexion (40) redondant comporte des éléments de circuit qui vérifient si aux deux connexions du dispositif de connexion (40), reliées au réseau d'ordinateurs, apparaît simultanément un signal de données transmis à l'intérieur d'un intervalle de temps donné, et en ce qu'il est prévu un circuit d'activation qui active ou désactive le dispositif de connexion (40) redondant, en fonction des résultats de la vérification.

18. Dispositif selon la revendication 17, caractérisé en ce que le dispositif de connexion (40) redondant commute à l'état inactivé, si aucune interruption n'est constatée.

19. Dispositif selon les revendications 17 et 18, caractérisé en ce que le dispositif de connexion (40) redondant est prévu entre deux noeuds (31, 35) d'un réseau d'ordinateurs.

20. Dispositif selon l'une des revendications 17 à 19, caractérisé en ce que le dispositif de connexion (40) redondant est formé par deux cartes d'interface (43, 44) redondantes avec un parcours de connexion (45, 46) redondant reliant celles-ci.

21. Dispositif selon la revendication 20, caractérisé en ce que la carte d'interface (43, 44) redondante respective est placée, en cas d'activation du dispositif de connexion (40) redondant, dans l'état segmenté et, en cas de désactivation du dispositif de connexion (40) redondant, dans l'état non segmenté.

22. Dispositif selon l'une des revendications 17 à 21, caractérisé en ce que le dispositif de connexion (40) redondant comporte un chien de garde (52), qui constate la durée d'un signal de données reçu et/ou émis.

23. Dispositif selon l'une des revendications 17 à 22, caractérisé en ce que le dispositif de connexion (40) redondant comporte un circuit de détection de fragment (53), qui constate les signaux de données dont la durée est inférieure à la plus petite longueur de signal de données admissible.

24. Dispositif selon l'une des revendications 17 à 23, caractérisé en ce que le dispositif de connexion (40) redondant comporte un circuit de détection de collision (54), qui constate un accès multiple aux ordinateurs et/ou systèmes d'ordinateurs du réseau d'ordinateurs.

25. Dispositif selon la revendication 24, caractérisé en ce que le dispositif de connexion (40) redondant comporte un circuit de détection de durée de collision (58) qui constate la durée de la collision.

26. Dispositif selon l'une des revendications 17 à 25, caractérisé en ce que le dispositif de connexion (40) redondant comporte un circuit d'autorisation (60).

27. Dispositif selon l'une des revendications 17 à 26, caractérisé en ce que le dispositif de connexion redondant est prévu en un point quelconque du réseau d'ordinateurs.

28. Dispositif selon l'une des revendications 17 à 27, caractérisé en ce qu'il est prévu au moins deux dispositifs de connexion redondants dans un réseau d'ordinateurs.

29. Dispositif selon l'une des revendications 17 à 29, caractérisé en ce qu'un parcours de connexion principal du dispositif de connexion redondant est placé pour son activation ou sa désactivation, dans l'état conducteur ou dans l'état non conducteur.
